Europäisches Patentamt

European Patent Office

Office européen des brevets

(19)

(11) Publication number : **0 378 277 B1**

(12) **EUROPEAN PATENT SPECIFICATION**

(45) Date of publication of patent specification :
22.04.92 Bulletin 92/17

(51) Int. Cl.⁵ : **A01D 43/08, A01F 29/10**

(21) Application number : **90200070.2**

(22) Date of filing : **11.01.90**

(54) **Chopping device.**

(30) Priority : **12.01.89 NL 8900065**

(43) Date of publication of application :
**18.07.90 Bulletin 90/29**

(45) Publication of the grant of the patent :
**22.04.92 Bulletin 92/17**

(84) Designated Contracting States :
**AT BE CH DE DK ES FR GB GR IT LI LU NL SE**

(56) References cited :
**DE-A- 2 064 991**
**DE-A- 2 810 538**
**DE-A- 3 635 544**
**DE-B- 1 296 445**
**FR-A- 1 223 076**
**FR-A- 2 100 000**

(56) References cited :
**FR-A- 2 376 614**
**GB-A- 7 165**
**NL-A- 7 017 081**
**US-A- 1 438 365**
**US-E- 25 991**

(73) Proprietor : **P.J. Zweegers en Zonen**
**Landbouwmachinefabriek B.V.**
**Nuenenseweg 165**
**NL-5667 KP Geldrop (NL)**

(72) Inventor : **van Amstel, Leonardus Hendrikus**
**Maria, Ir.**
**Roelantlaan 323**
**NL-5665 PK Geldrop (NL)**

(74) Representative : **Vollebregt, Cornelis Jacobus**
**et al**
**Algemeen Octrooibureau P.O. Box 645**
**NL-5600 AP Eindhoven (NL)**

EP 0 378 277 B1

Jouve, 18, rue Saint-Denis, 75001 PARIS

## Description

The invention relates to a chopping device provided with a frame, with mowing means for cutting the crop on the field and with opposed drum-shaped conveyors, which rotate during operation, between which the cut crop is moved in the direction of a feed opening of a casing provided on the frame, in which casing there is rotatably arranged a chopping wheel, whereby a first drum-shaped conveyor is formed by a drum having a smooth shell, whereby an edge of a scraping plate butts against the outer circumference of said shell, said scraping plate at its side remote from the drum joining a counter knife, which co-operates with the chopping wheel for cutting the crop, whilst the other drum-shaped conveyor is provided with projections for carrying along the crop.

From DE-A-1,296,445 there is known a retracting device for a chopping device, wherein use is made of a drum having a smooth shell and co-operating with a scraping plate, and of a drum provided with carriers formed by radially projecting ridges extending in the longitudinal direction of the drum, the free ends of said ridges sweeping along the surface determining the feed opening of the casing containing the chopping wheel. In this known retracting device the crop which is supplied is therefore pushed across the scraping plate and the counter knife joining said plate into the casing containing the chopping wheel by means of the drum-shaped conveyor having carriers. In practice it has become apparent that when crop is supplied to the casing containing the chopping wheel in this manner the crop is cut in an irregular manner, so that the product which is eventually obtained has an irregular composition, which is undesired for further processing and for the intake of the product by cattle, respectively.

From FR-A-1,223,076 there is known a chopping device provided with a pick-up drum having spring-loaded teeth, by means of which previously mown crop can be picked up from the ground. Said drum supplies the crop to a conveyor which rotates during operation, said conveyor being provided with carriers between which the ends of the teeth of the pick-up drum move. It is necessary for the conveyor to rotate at a comparitively great speed thereby, in order to prevent that crop remains stuck to the teeth of the pick-up drum. The crop will therefore be moved towards the feed opening of the casing containing the chopping wheel at a comparatively great velocity, which also results in irregular cutting of the crop.

It is true that scraping means are provided between the carriers of the conveyor in said device, but at the discharge side of the conveyor the carriers do no project beyond the paths described by the carriers during operation, so that said scraping means cannot influence the movement of the crop which is moved past the conveyor towards the rear by said conveyor.

US-A-1,438,365 discloses a supply mechanism for the supply of crop to a casing containing a chopping wheel, wherein the supply mechanism is built up of two endless conveyor belts arranged one above the other, which conveyor belts are provided with projections which extend between guide bars provided in the longitudinal direction of the conveyor belts. Such a supply mechanism equipped with conveyor belts will by itself be too voluminous for a chopper which is to be moved across the field, and by means of which the crop can be mown and chopped. Furthermore the guide bars of the lower conveyor belt end at some distance from the counter knife, whilst on the contrary the guide bars of the upper conveyor belt do project above the counter knife. On the one hand it cannot be avoided hereby that crop is carried along between the ends of the guide bars of the lower conveyor belt and the counter knife, whilst on the other hand, as a result of the very small degree to which the ends of the bars of the upper conveyor belt overlap the counter knife, no effective co-operation between the counter knife and the ends of guide bars of the upper conveyor belt for influencing the movement of the crop in the direction of the chopping wheel can be effected.

The object of the invention is to obtain a chopping device of the kind mentioned in the preamble, wherein the disadvantages of the known devices can be avoided and an even chopping of the crop can be effected.

According to the invention this objective can be accomplished in that guide bars are provided, which co-operate with the drum having carriers, whereby the guide bars extend along part of their length about the axis of rotation of the drum provided with finger-shaped projections such that the finger-shaped projections move between the guide bars along part of their path of movement, whilst the free ends of the guide bars which, seen in the intended direction of movement of the crop between the conveying drums, project beyond the path of movement of the finger-shaped projections, are located near the feed opening of the casing and opposite the scraping plate.

When using the construction according to the invention it will be possible to obtain a compact construction of the supply mechanism, formed by the drum-shaped conveyors, for supplying crop to be chopped to the casing containing the chopping wheel, whereby during operation the crop moved by the conveyors is grabbed between the scraping plate, with the counter knife joining said scraping plate, and the ends of the guide bars located opposite the scraping plate, and said crop is evenly pushed in the direction of the casing containing the chopping wheel by crop supplied by means of the drum-shaped conveyors.

In practice it has become apparent that during normal operation the crop is cut short hereby into parts having a substantially constant length.

Variations in the quantity of crop supplied by means of the conveyors can be set off effectively when the drum-shaped conveyor co-operating with the guide bars is movably connected, together with the guide bars, with the frame of the device, such that the assembly of guide bars and drum-shaped conveyor co-operating therewith can move to and fro transversely to the axis of rotation of the drum having a smooth shell.

A simple construction of the drum having finger-shaped projections can be obtained when the drum is provided with a number of outwardly extending wings, in which recesses bounding the finger-shaped projections are provided, whilst the guide bars extend through said recesses.

Preferably at least the ends of the finger-shaped projections are slightly conical thereby, as a result of which they run more easily between the guide bars and furthermore it is prevented that crop gets wedged between the guide bars and the fingers.

According to a further feature of the invention the free ends of the guide bars can move against spring force in a direction remote from the scraping plate, so that the distance between the scraping plate and the free ends of the crop will be adapted to the quantity of crop which is supplied, whereby said crop still remains pressed against the scraping plate in the desired manner.

Preferably the construction of the carriers and the guide bars is such, that seen in the direction of the axis of rotation of the drum comprising the projections, a part of a projection beyond the guide bars includes an obtuse angle with the part of the guide bar located in front of the relevant part of the projection, seen in the direction of rotation of the drum. As a result of this undesired wedging or cutting of the crop between the guide bars and projections is prevented.

A particularly effective, compact and effective construction of the device can be obtained when circular cutting knives are secured to the bottom sides of the drums which are rotatable about upwardly extending axes of rotation, said circular cutting knives being adjacent to the feed opening of the casing containing the chopping wheel. In this construction the drums can be used simultaneously for cutting the crop, as a result of which a very short construction of the chopper can be obtained.

It can thereby be realised that the crop on the field is effectively grabbed and conveyed when the construction of the carriers and the guides bars is such that seen in the direction of the axis of rotation of the drum comprising the projections, the point where the ends of the projections first project beyond the guide bars at the side of the drum having the projections, which is directed away from the drum having a smooth shell, is located between a plane through the axes of rotation of the two drums and the casing surrounding the chopping wheel. The crop is thereby carried through a large circumferential angle of the drum by the projections and pushed into the gap between the two co-operating drums.

The invention will be explained hereinafter with reference to a few possible embodiments of the construction according to the invention illustrated in the accompanying figures.

Figure 1 is a diagrammatic plan view of a harvesting machine in the form of a maize chopper, hitched to a tractor.

Figure 2 diagrammatically illustrates on a larger scale, partly in elevational view and partly in section, a casing accommodating a chopping wheel of the device illustrated in Figure 1, with conveyors in the shape of drums arranged in front of said casing.

Figure 3 is a side elevational view of Figure 2, wherein for easy reference certain parts are indicated by chain-dotted lines.

Figure 4 is a larger-scale elevational view of a drum-shaped conveyor.

Figure 5 is a side elevational view of Figure 4.

Figure 6 illustrates a second possibility for the construction and the arrangement of conveyors according to the invention.

Figures 7 and 8 are each plan views of figure 6, showing several adjusting possibilities of the guide bars.

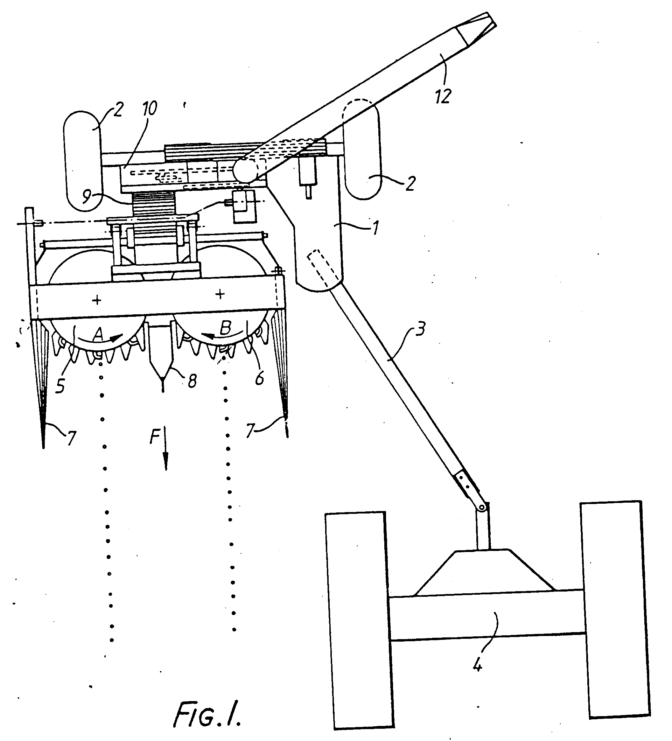

The maize chopper of Figure 1 comprises a frame 1, which is supported by ground wheels 2. The embodiment of the maize chopper illustrated in figure 1 can be hitched to a tractor 4 in the usual mannier by means of a drawbar 3. It will also be conceivable, however, to make the maize chopper self-propelled or directly attachable to a tractor.

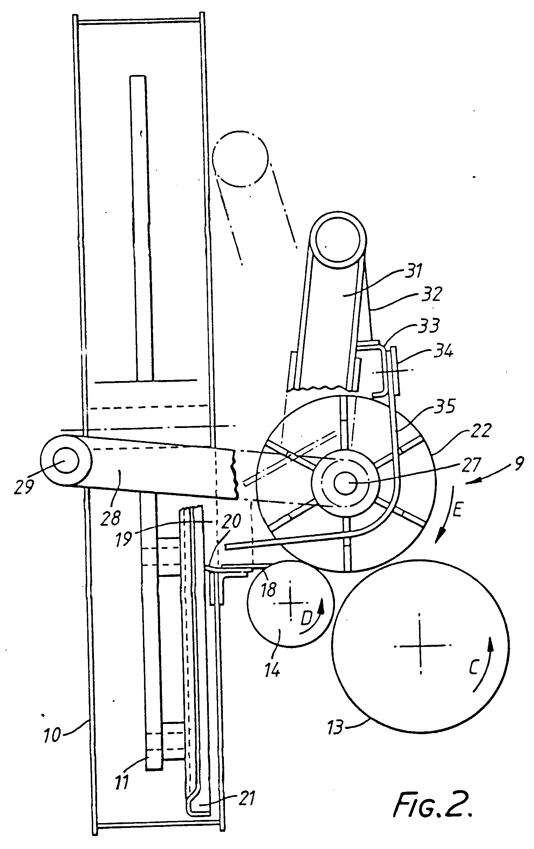

The illustrated maize chopper is furthermore provided with a pair of harvesting means 5 and 6 arranged side by side which, seen in plan view, are located between two stalk dividers 7 which extend in front of the harvesting means. Between the two harvesting means 5 and 6 there is provided a further forwardly extending stalk divider 8. Behind the harvesting means 5 and 6 having cutting means there is arranged a conveying mechanism 9, which supplies the cut crop, which is conveyed towards the rear between the harvesting means 5 and 6, which rotate in the direction indicated by the arrows A and B during operation, to the casing 10 supported by the frame 1, in which there is rotatably arranged a chopping wheel 11 (Figure 2). To the casing 10 there is connected, in a manner known per se, a discharge spout 12 for the crop chopped in the casing 10.

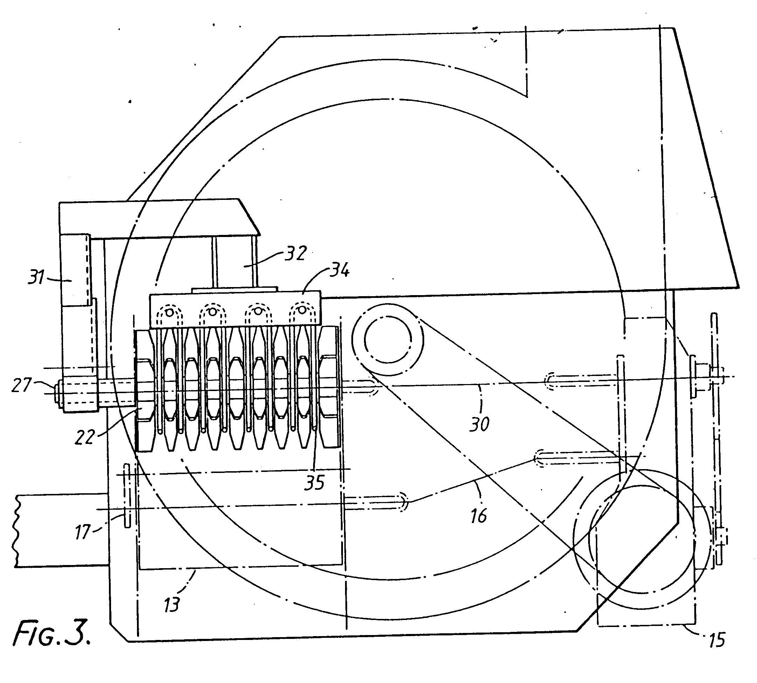

As is illustrated in more detail in the Figures 2 and 3 the conveying mechanism 9 comprises a pair of conveyors 13 and 14 formed by drums which are rotatable about axes of rotation which extend parallel and horizontally to each other, said conveyors having a fixed journalling in the illustrated embodiment.

The drum 13 can be rotated in the direction indicated by the arrow C, from a diagrammatically illustrated gearbox 15 supported by the frame, via a pivoting auxiliary shaft 16. The drum 14 is coupled, by means of a chain transmission 17, to the drum 13, so that during operation the drum 14 will be rotated in the direction according to arrow D. The gearbox 15 can thereby be coupled to the power take-off of the tractor in the usual manner (not shown), by means of an auxiliary shaft.

As furthermore appears from Figure 2 the end of a scraping plate 18 rests against the outer circumference of the drum 14, said scraping plate joining the lower boundary edge of an feed opening 19 provided in the casing 10. At its side directed towards the interior of the casing 10 the lower edge of the feed opening 19 is bounded by a knife 20 which is fixed to the casing 10, which knife co-operates with knives 21 forming part of the chopping wheel 11 for chopping material introduced to the casing. The construction of such a chopping wheel and the knife 20 arranged near the feed opening of the casing accommodating the chopping wheel, which knife co-operates with the chopping wheel, is usual and its construction is not a specific part of the present invention, so that this construction will not be discussed in more detail.

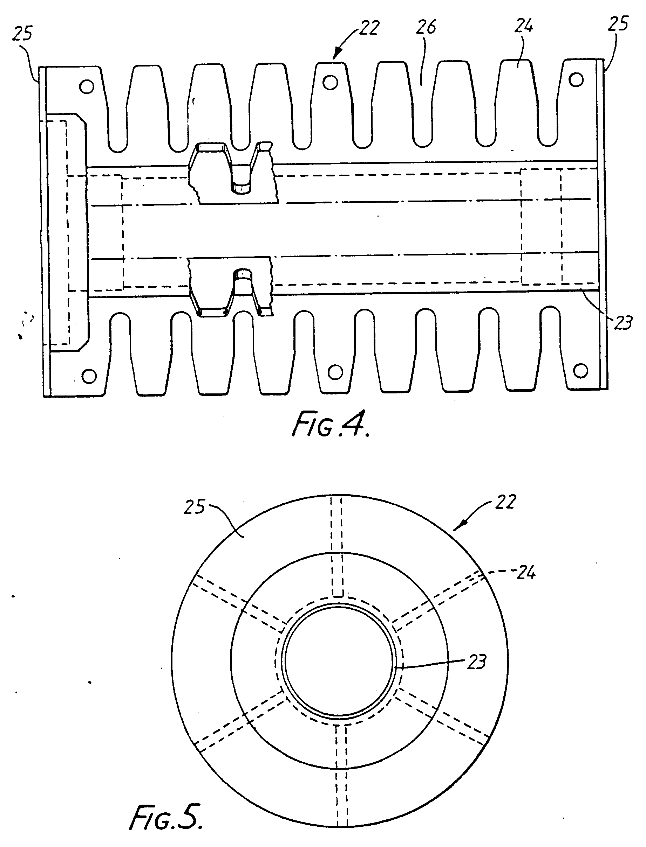

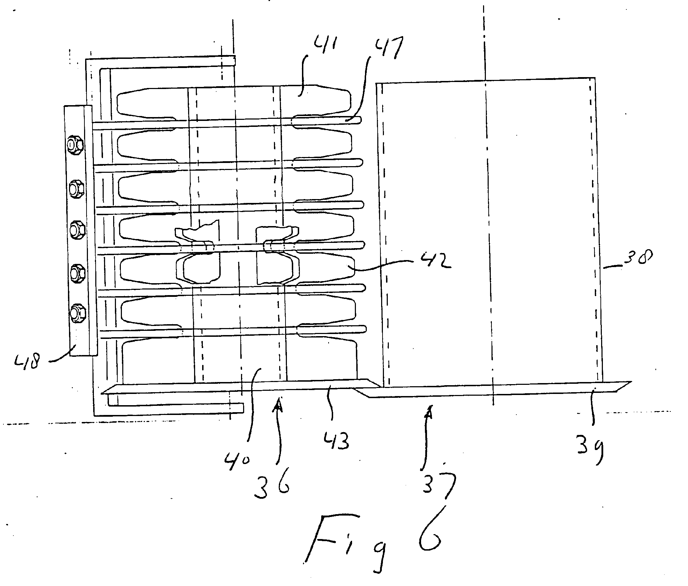

Above the drum-shaped conveyors 13 and 14 there is arranged a further drum-shaped conveyor 22. As appears in particular from Figures 4 and 5 said conveyor comprises a tubular body 23 to which there are secured a plurality of wings 24 which extend radially from the tubular body 23. The wings 24 extend between end plates 25 secured to the ends of the tubular body 23. In the wings 24 there are provided regularly spaced recesses 26, so that in fact each wing 24 is built up of a plurality of radially extending, finger-shaped parts.

The tubular body 23 is secured to a shaft 27 extending through the bush, said shaft being journalled in an arm 28 extending from the shaft 27 toward the rear, said arm with its other end being pivotally coupled to the frame of the harvesting device, by means of a shaft 29 extending parallel to the shaft 27.

The other end of the shaft 27 is coupled, by means of a pivoting auxiliary shaft 30, to the gearbox 15, such that the drum-shaped conveyor 22 can be driven in the direction indicated by the arrow E, rotating about a horizontal axis of rotation.

As furthermore appears, in particular from Figure 3, an L-shaped carrier 31 is secured to the end of the arm 28 located near the shaft 27. The carrier 31 has a downwardly extending arm 32 at its end remote from the arm 28, to which arm 32 there is secured a beam 33 extending parallel to the shaft 27. By means of a clamping plate 34, which extends parallel to the beam 33, the ends of guide bars 35 are clamped down, said guide bars being more or less L-shaped. From their point of attachment to the beam 33 the bars 35 extend downwards along part of their length at the side of the tubular body 23 which is directed away from the casing 10, whilst along the remainder of their length they extend under the tubular body in the direction of the feed opening 19 of the casing, whereby the free ends of the bars are located near said feed opening, as is illustrated in Figure 2. It will be seen that the guide bars 35 extend through the recesses 26 provided in the drum-shaped conveyor 22 along part of their length, so that said drum-shaped conveyor can be rotated in the direction indicated by the arrow E without impediment by the guide bars 35.

The pivoting of the arm 28 with the drum 22 carried by said arm in a direction towards the drums 13 and 14 is limited by a stop (not shown). The drum 22 with the parts supporting the drum 22 is thereby freely pivotable from the position illustrated by means of full lines in Figure 2 in the direction of the position diagrammatically indicated by means of dotted lines in Figure 2. Possibly a spring-loaded mechanism (not shown) is provided for opposing the upward pivoting movement of the drum 22.

During operation the device will be moved in the direction of arrow F by means of the tractor 4, and long-stalked crop on the field will be mown by means of the harvesting means 5 and 6 and led in the direction of the conveying mechanism 9. The crop supplied is thereby grabbed by the drum-shaped conveyors 22 and 13 and transported toward the rear, in the direction of the feed opening 19 of the casing,

between said conveyors and between the conveyor 22 and the conveyor 14, in order to be chopped in the usual manner in said casing.

The crop thereby moves under the guide bars 35, which guide bars guide the crop to a point near the feed opening 19 and thus prevent that the crop moves upwards into the space located between the drum 22 and the casing 10. Thus an even supply of the crop to the casing 10 is ensured during operation, so that also a regular supply of the crop through the casing 10 can be ensured and clogging can be prevented. The wings 24 substantially formed by finger-shaped projections also effect an effective movement of the crop thereby, which also contributes toward the even movement of the harvested crop.

Of course variations to the construction described above are conceivable within the spirit and scope of the invention.

The Figures 6 - 8 diagrammatically illustrate a part of a chopping device, provided with a pair of drum-shaped conveyors 36 and 37 which are rotatable about vertical axes of rotation. The conveyor 37 is again formed by a drum having a smooth shell 38, to the bottom side of which there is secured a circular cutting knife 39. Like the conveyor 22 the drum-shaped conveyor 36 is built up of a centrally located tube 40, to which there are secured outwardly extending wings 41, in which regularly spaced recesses are provided for forming finger-shaped projections 42, which are slightly conical in the direction of their free ends.

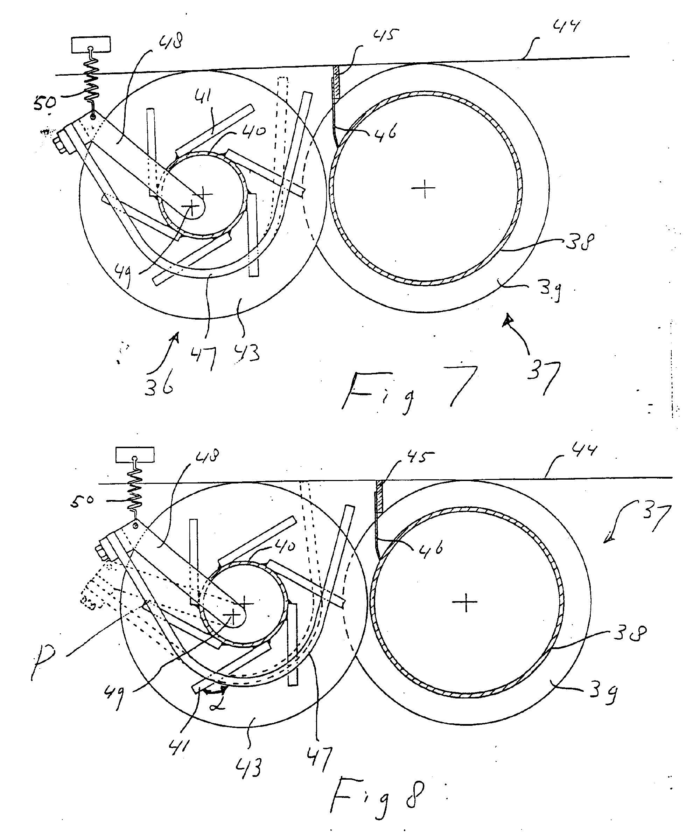

To the bottom side of the drum-shaped means 36 there is likewise secured a circular knife 43, which overlaps the knife 39. As appears in particular from Figures 7 and 8 the arrangement of the two drum-shaped conveyors 36 and 37 is thereby such that, seen in the direction of the axes of rotation of the drum-shaped conveyors, the rearmost points of the circular cutting knives 39 and 43 are located near the diagrammatically indicated front wall 44 of the casing accommodating the chopping means. To the front wall 44 there is secured the counter knife 45 which co-operates with the chopping means (not shown). To said counter knife there is secured a scraping plate 46. The edge of the scraping plate 46 remote from the counter knife co-operates with the outer side of the shell 38 of the conveyor 37.

Also here the device is provided with a number of guide bars 47, which are preferably made of spring steel. The guide bars 47 are clamped with their ends to a carrier 48 at the side of the conveyor 36 remote from the conveyor 37, said carrier 48 being pivotally connected, about a pivot pin 49, with the frame of the chopper. The pivot pin 49 extending parallel to the axes of rotation of the conveyors 36 and 37 is thereby located near the axis of rotation of the conveyor 36 or coincides with said axis of rotation.

Between the pivotable carrier 48 and a fixed point of the frame of the chopper there is provided a draw spring 50, which opposes pivoting of the carrier 48 with the guide bars 47 secured thereto in an anti-clockwise direction, seen in Figure 8. A stop (not shown) limits a pivoting movement of the carrier 48 under the influence of the spring 50, in a clockwise direction, seen in Figure 8. Possibly the construction can be made such that the teeth 47 are pivotable against spring tension, individually relative to each other or in groups relative to each other, about the pivot pin 49. Means may be provided for making the force exerted by the spring 50 adjustable.

A further possibility is to construct the carrier 48 with the teeth 47 such that the distance between the free ends of the teeth 47 and the scraping plate 46 is adjustable in the unloaded position of the teeth.

The possibly spring-loaded construction of the teeth 47 and/or the possibility of the teeth to pivot against spring tension, jointly or separately, about the pivot pin 49 ensures that there is constantly a good pressure of the crop against the scraping plate and the counter knife 45, while the position of the teeth is adjusted to the quantity of crop supplied by the conveyors.

As furthermore appears from Figures 7 and 8 the carrying means formed by the wings 41 are arranged such that said carrying means 41 extend obliquely towards the rear and opposite to the direction of rotation from their point of attachment to the tube 40 relative to a connecting line extending through the axis of rotation of the carrying means 36 and the point of attachment of a relevant carrier 41, so that said carrying means are arranged in a dragging position relative to the axis of rotation, as it were. Because of this the carriers better grab the crop at the side of the carrying means 36 remote from the carrying means 47, and also the crop is better released from the carriers near the scraping plate.

Preferably the design is thereby chosen such that the angle, which a part of a carrier projecting beyond a guide bar 47 includes with the part of the guide bar located in front of said part, seen in the direction of rotation of the carrier, is constantly larger than 90°, and also the carriers 41 preferably already exit from their position between the guide bars at the side of the conveyor 36 remote from the conveyor 47 at a point, which is located between a plane through the two axes of rotation of the conveyors 36 and 37 and the front wall 44 of the casing of the chopping device accommodating the chopping wheel. Thus it is effected that the carriers carry the crop through a large circumferential angle of the conveyor 36, which contributes toward an effective operation of the chopping device.

## Claims

1. A chopping device provided with a frame (1), with mowing means (5, 6) for cutting the crop on the field and with opposed drum-shaped conveyors (14, 22; 36, 37), which rotate during operation, between which the cut crop is moved in the direction of an feed opening of a casing (10) provided on the frame (1), in which casing (10) there is rotatably arranged a chopping wheel (11), whereby a first drum-shaped conveyor (14, 37) is formed by a drum having a smooth shell (38), whereby an edge of a scraping plate (18, 46) butts against the outer circumference of said shell (38), said scraping plate (18, 46) at its side remote from the drum (14, 37) joining a counter knife (20, 45), which co-operates with the chopping wheel (11) for cutting the crop, whilst the other drum-shaped conveyor (22, 36) is provided with projections (24, 41) for carrying along the crop, characterised in that guide bars (35, 47) are provided, which co-operate with the drum (22, 36) having projections (24, 41), whereby the guide bars (35, 47) extend along part of their length about the axis of rotation of the drum (22, 36) provided with finger-shaped projections (24, 41), such that the finger-shaped projections (24, 41) move between the guide bars (35, 47) along part of their path of movement, whilst the free ends of the guide bars (35, 47) which, seen in the intended direction of movement of the crop between the conveying drums (14, 22; 36, 37), project beyond the path of movement of the finger-shaped projections (35, 47), are located near the feed opening of the casing (10) and opposite the scraping plate (18, 46).

2. A chopping device according to claim 1, characterised in that the drum-shaped conveyor (22) co-operating with the guide bars (35) is movably connected with the frame (1), such that the guide bars (35) with the drum-shaped conveyor (22) co-operating therewith can move to and fro in a direction transversely to the axis of rotation of the drum (14) having a smooth shell.

3. A chopping device according to claim 2, characterised in that the drum-shaped conveyor (22) with the guide bars (35) is pivotable about a pivot pin (29) extending parallel to the axis of rotation of said conveyor (22), said pivot pin (29) being arranged at the side of the casing (10) accommodating the chopping wheel (11) remote from the conveyor (22).

4. A chopping device according to any one of the preceding claims, characterised in that the drum-shaped conveyor (22) having finger-shaped projections is provided with a plurality of outwardly extending wings (24), in which recesses (26) defining the finger-shaped projections are provided.

5. A chopping device according to any one of the preceding claims, characterised in that at least the ends of the finger-shaped projections (24) are slightly conical.

6. A chopping device according to any one of the preceding claims, characterised in that the free ends of the guide bars (35, 47) can move against spring force, in a direction remote from the scraping plate (20, 46).

7. A chopping device according to claim 6, characterised in that said spring force is adjustable.

8. A chopping device according to any one of the preceding claims, characterised in that the guide bars (35, 47) are made of aresilient material.

9. A chopping device according to any one of the preceding claims, characterised in that a guide bar (47) is secured to a carrier (48), which can pivot against spring force (50) about a pivot pin (49) which extends at least substantially parallel to and near the axis of rotation of the drum (36) co-operating with the guide bar (47), or coincides with said axis of rotation.

10. A chopping device according to any one of the preceding claims, characterised in that the distance between the free end of a guide bar (35, 47) in unloaded condition and the scraping plate (20, 46) is adjustable.

11. A chopping device according to any one of the preceding claims, characterised in that the projections (41) extend from their point of attachment to the drum (36) in the direction of their free ends, against the intended direction of rotation, seen in the direction of the axis of rotation of the drum.

12. A chopping device according to any one of the preceding claims, characterised in that the construction of the projections (41) and the guide bars (47) is such that, seen in the direction of the axis of rotation of the drum (36) comprising the projections (41), a part of a projection (41) projecting beyond the guide bars (47) includes an obtuse angle ($\alpha$) with the part of the guide bar (47) located in front of the relevant part of the projection (41), seen in the direction of rotation of the drum.

13. A chopping device according to any one of the preceding claims, characterised in that to the bottom sides of the drums (36, 47) which are rotatable about upwardly extending axes of rotation there are secured circular cutting knives (39, 43), which are adjacent to the feed opening of the casing (44) containing the chopping wheel.

14. A chopping device according to any one of the preceding claims, characterised in that the construction of the projections and the guide bars is such that, seen in the direction of the axis of rotation of the drum comprising the projections, the point where the ends of the projections first project beyond the guide bars (47) at the side of the drum (36) having the carriers which is remote from the drum (37) having a smooth shell (38), is located between a plane through the axes of rotation of the two drums (36, 37) and the casing (44) containing the chopping wheel.

**Patentansprüche**

1. Eine Häckselvorrichtung mit einem Rahmen (1), mit einer Mäheinrichtung (5, 6) zum Schneiden von Feldfrüchten bzw. des Getreides auf dem Feld und mit gegenüberliegenden trommelförmigen Förderem (14, 22; 36, 37), welche sich während des Betriebs drehen, und zwischen welchen das geschnittene Getreide in die Richtung von einer Zuführungsöffnung eines Gehäuses (10), das auf dem Rahmen (1) vorgesehen ist, bewegt wird, wobei in dem Gehäuse (10) ein Häckselrad (11) drehbar angeordnet ist, wobei ein erster trommelförmiger Förderer (14, 37) durch eine Trommel mit einem glatten Mantel (38) gebildet ist, wobei ein Rand einer Schabeplatte (18, 46) gegen den äußeren Umfang des Mantels (38) anstößt, die Schabeplatte (18, 46) an ihrer von der Trommel (14, 37) entfernten Seite an ein Gegenmesser (20, 45) angrenzt, welches mit dem Häckselrad (11) zum Schneiden des Getreides zusammenarbeitet, während der andere trommelförmige Förderer (22, 36) mit Vorsprüngen (24, 41) zur Längsförderung des Getreides versehen ist, **dadurch gekennzeichnet**, daß Führungsstäbe (35, 47) vorgesehen sind, welche mit der Trommel (22, 36), welche Vorsprünge (24, 41) aufweist, zusammenarbeiten, wobei die Führungsstäbe (35, 47) sich über einen Teil ihrer Länge um die Drehachse der Trommel (22, 36), welche mit fingerförmigen Vorsprüngen (24, 41) versehen ist, derart erstrecken, daß die fingerförmigen Vorsprünge (24, 41) sich zwischen den Führungsstäben (35, 47) entlang eines Teils ihrer Bewegungsbahn bewegen, während die freien Enden der Führungsstäbe (35, 47), welche, in der vorgesehenen Bewegungsrichtung des Getreides zwischen den Fördertrommeln (14, 22; 36, 37) gesehen, über die Bewegungsbahn der fingerförmigen Vorsprünge (24, 41) vorstehen, nahe der Zuführungsöffnung des Gehäuses (10) und gegenüberliegend zu der Schabeplatte (18, 46) angeordnet sind.

2. Eine Häckselvorrichtung nach Anspruch 1, **dadurch gekennzeichnet,** daß der trommelförmige Förderer (22), welcher mit den Führugsstäben (35) zusammenarbeitet, bewegbar mit dem Rahmen (1) verbunden ist, so daß die Führungsstäbe (35) mit dem trommelförmigen Förderer (22), der mit ihnen zusammenarbeitet, sich in einer Richtung quer zur Drehachse der Trommel (14), welche einen glatten Mantel aufweist, hin- und herbewegen können.

3. Eine Häckselvorrichtung nach Anspruch 2, **dadurch gekennzeichnet,** daß der trommelförmige Förderer (22) mit den Führungsstäben (35) um einen Drehstift (29), der sich parallel zu der Drehachse des Förderers (22) erstreckt, verschwenkbar ist, wobei der Drehstift (29) an der Seite des das Häckselrad (11) aufnehmenden Gehäuses (10) abgewandt von dem Förderer (22) angeordnet ist.

4. Eine Häckselvorrichtung nach wenigstens einem der vorhergehenden Ansprüche, **dadurch gekennzeichnet,** daß der trommelförmige Förderer (22), welcher fingerförmige Vorsprünge aufweist, mit einer Vielzahl von sich nach außen erstreckenden Flügeln (24) versehen ist, in welchen Vertiefungen (26), die die fingerförmigen Vorsprünge bilden, vorgesehen sind.

5. Eine Häckselvorrichung nach wenigstens einem der vorherghenden Ansprüche, **dadurch gekennzeichnet,** daß wenigstens die Enden der fingerförmigen Vorsprünge (24) leicht konisch sind.

6. Eine Häckselvorrichtung nach wenigstens einem der vorhergehenden Ansprüche, **dadurch gekennzeichnet,** daß die freien Enden der Führungsstäbe (35, 47) sich in einer von der Schabeplatte (20, 46) wegführenden Richtung gegen eine Federkraft bewegen Können.

7. Eine Häckselvorrichtung nach Anspruch 6, **dadurch gekennzeichnet,** daß die Federkraft einstellbar ist.

8. Eine Häckselvorrichtung nach wenigstens einem der vorhergehenden Ansprüche, **dadurch gekennzeichnet,** daß die Führungsstäbe (35, 47) aus einem elastischen Material hergestellt sind.

9. Eine Häckselvorrichtung nach wenigstens einem der vorhergehenden Anpsrüche, **dadurch gekennzeichnet,** daß ein Führungsstab (47) an einem Träger (48) befestigt ist, welcher sich gegen eine Federkraft (50) um einen Drehstift (49), welcher sich wenigstens im wesentlichen parallel zu und nahe der Drehachse der mit dem Führungsstab (47) zusammen- arbeitenden Trommel erstreckt oder mit der Drehachse zusammenfällt drehen kann.

10. Eine Häckselvorrichtung nach wenigstens einem der vorhergehenden Ansprüche, **dadurch gekennzeichnet,** daß der Abstand zwischen dem freien Ende eines Führungsstabes (35, 47) im unbelasteten Zustand und der Schabeplatte (20, 46) einstellbar ist.

11. Eine Häckselvorrichtung nach wenigstens einem der vorhergehenden Ansprüche, **dadurch gekennzeichnet,** daß die Vorsprünge (41) sich von ihrem Befestingpunkt an der Trommel (36) in Richtung ihrer freien Enden gegen die vorgesehene Drehrichtung, in Richtung der Drehachse der Trommel gesehen erstrecken.

12. Eine Hächselvorrichtung nach wenigstens einer der vorhergehenden Anssprüche, **dadurch gekennzeichnet,** daß der Aufbau der Vorsprünge (41) und der Führungsstäbe (47), gesehen in Richtung der Drehachse der die Vorsprünge (41) umfassenden Trommel (36), derart vorgesehen ist, daß ein Teil eines Vorsprungs (41), der über die Führungsstäbe (47) hinaussteht, einen stumpfen Winkel α mit dem Teil des Führungsstabes (47) einnimmt, welcher vor dem relevanten Teil des Vorsprungs (41), in Richtung der Drehachse der Trommel gesehen, angeordnet ist.

13. Eine Häckselvorrichtung nach wenigstens einem der vorhergehenden Ansprüche, **dadurch gekennzeichnet,** daß an den unteren Seiten der Trommeln (36, 47), welche um sich nach oben erstreckende Drehachsen drehbar sind, kreisförmige Schneidmesser (39, 43), welche angrenzend an die Zuführungsöffnung des das Häckselrad enthaltenden Gehäuses (44) vorgesehen sind, befestigt sind.

14. Eine Häckselvorrichtung nach wenigstens einem der vorhergehenden Ansprüche, **dadurch gekennzeichnet,** daß der Aufbau der Vorsprünge und der Führungsstäbe, in Richtung der Drehachse der die Vorsprünge umfassenden Trommel gesehen, derart vorgesehen ist, daß der Punkt, wo die Enden der Vorsprünge zuerst über die Führungsstäbe (47) an der Seite der die Träger aufweisenden Trommel (36), welche von der einen glatten Mantel (38) aufweisenden Trommel (37) entfernt ist, überstehen, zwischen einer Ebene durch die Drehachsen der zwei Trommeln (36, 37) und dem das Häckselrad enthaltenden Gehäuse (44) angeordnet ist.

**Revendications**

1. Appareil de hachage muni d'un châssis (1), comprenant un dispositif (5, 6) de fauchage destiné à couper la matière de récolte se trouvant sur un champ et ayant des transporteurs opposés (14, 22 ; 36, 37) en forme de tambour qui tournent pendant le fonctionnement et entre lesquels la matière de récolte coupée est déplacée vers une ouverture d'alimentation d'un carter (10) disposé sur la châssis (1), une roue (11) de hachage étant montée dans le carter (10) afin qu'elle puisse tourner, si bien qu'un premier transporteur (14, 37) en forme de tambour est constitué d'un tambour ayant une enveloppe lisse (38) de manière qu'un bord d'une plaque de raclage (18, 46) soit en butée contre la circonférence externe de l'enveloppe (38), la plaque de raclage (18, 46), de son côté distant du tambour (14, 37), étant associée à un couteau auxiliaire (20, 45) qui coopère avec la roue de hachage (11) pour la coupe de la matière de récolte alors que l'autre transporteur (22, 36) en forme de tambour a des saillies (24, 41) destinées à entraîner la matière de récolte, caractérisé en ce que des barres de guidage (35, 47) sont disposées afin qu'elles coopèrent avec le tambour (22, 36) ayant les saillies (24, 41), d'une manière telle que les barres de guidage (35, 47) sont disposées, le long d'une partie de leur longueur, autour de l'axe de rotation du tambour (22, 36) ayant les saillies (24, 41) en forme de doigts, si bien que les saillies (24, 41) en forme de doigts se déplacent entre les barres de guidage (35, 47) le long d'une partie de leur trajet de déplacement, alors que les extrémités libres des barres de guidage (35, 47) qui, vues dans le sens prévu de déplacement de la matière de récolte entre les tambours de transport (14, 22 ; 36, 37), dépassent au-delà du trajet de déplacement des saillies (35, 47) en forme de doigt, sont placées près de l'ouverture d'alimentation du carter (10) et en face de la plaque de raclage (18, 46).

2. Appareil de hachage selon la revendication 1, caractérisé en ce que le transporteur (22) en forme de tambour coopérant avec les barres de guidage (35) est raccordé au châssis (1) afin qu'il soit mobile, si bien que les barres de guidage (35), avec lesquelles coopère le transporteur (22) en forme de tambour, peuvent se déplacer avec le transporteur (22) alternativement en direction transversale à l'axe de rotation du tambour (14) qui a une enveloppe lisse.

3. Appareil de hachage selon la revendication 2, caractérisé en ce que le transporteur (22) en forme de tambour, avec des barres de guidage (35), est destiné à pivoter autour d'un pivot (29) qui est parallèle à l'axe de rotation du transporteur (22), le pivot (29) étant placé du côté du carter (10), qui loge la roue de hachage (11), qui est distant du transporteur (22).

4. Appareil de hachage selon l'une quelconque des revendications précédentes, caractérisé en ce que le transporteur (22) en forme de tambour ayant les saillies en forme de doigts comporte plusieurs ailettes (24) dépassant vers l'extérieur dans lesquelles sont formées des cavités (26) délimitant les saillies en forme de doigts.

5. Appareil de hachage selon l'une quelconque des revendications précédentes, caractérisé en ce que les extrémités des saillies (24) en forme de doigts au moins sont légèrement coniques.

6. Appareil de hachage selon l'une quelconque des revendications précédentes, caractérisé en ce que les extrémités libres des barres de guidage (35, 47) peuvent se déplacer malgré une force d'élasticité, en sens opposé à celui de la plaque de raclage (20, 46).

7. Appareil de hachage selon la revendication 6, caractérisé en ce que la force élastique est réglable.

8. Appareil de hachage selon l'une quelconque des revendications précédentes, caractérisé en ce que les barres de guidage (35, 47) sont formées d'un matériau élastique.

9. Appareil de hachage selon l'une quelconque des revendications précédentes, caractérisé en ce qu'une barre de guidage (47) est fixée à un support (48) qui peut pivoter, malgré une force élastique (50), autour d'un pivot (49) qui est au moins sensiblement parallèle à l'axe de rotation du tambour (36) qui coopère avec la barre de guidage (47) et qui est proche de cet axe ou qui coïncide avec l'axe de rotation.

10. Appareil de hachage selon l'une quelconque des revendications précédentes, caractérisé en ce que la distance comprise entre l'extrémité libre d'une barre de guidage (35, 47) non soumise à une charge et la plaque de raclage (20, 46) est réglable.

11. Appareil de hachage selon l'une quelconque des revendications précédentes, caractérisé en ce que les saillies (41) sont disposées, de leur point de fixation au tambour (36) vers leurs extrémités libres, en sens opposé au sens prévu de rotation, vues dans la direction de l'axe de rotation du tambour.

12. Appareil de hachage selon l'une quelconque des revendications précédentes, caractérisé en ce que la construction des saillies (41) et des barres de guidage (47) est telle que, vues dans la direction de l'axe de rotation du tambour (36) qui comporte les saillies (41), une partie de saillie (41) dépassant au-delà des barres de guidage (47) forme un angle obtus ($\alpha$) avec la partie de la barre de guidage (47) qui est en avant de la partie correspondante de la saillie (41), vues dans le sens de rotation du tambour.

13. Appareil de hachage selon l'une quelconque des revendications précédentes, caractérisé en ce que des couteaux circulaires (39, 43) de coupe sont fixés aux faces inférieures des tambours (36, 47) qui peuvent tourner autour d'axes de rotation qui remontent, les couteaux étant adjacents à l'ouverture d'alimentation du carter (44) qui contient la roue de hachage.

14. Appareil de hachage selon l'une quelconque des revendications précédentes, caractérisé en ce que la construction des saillies et des barres de guidage est telle que, vues dans la direction de l'axe de rotation du tambour comprenant les saillies, l'emplacement auquel les extrémités des saillies dépassent initialement au-delà des barres de guidage (47), du côté du tambour (36) ayant les supports qui est opposé au tambour (37) ayant l'enveloppe lisse (38), se trouve entre un plan passant par les axes de rotation des deux tambours (36, 37) et le carter (44) qui contient la roue de hachage.

FIG.1.

FIG.2.

Fig. 3.

FIG.4.

FIG.5.

Fig 6

Fig 7

Fig 8